# EUROPÄISCHE PATENTSCHRIFT

(11) **EP 0 590 265 B1**
(45) Veröffentlichungstag und Bekanntmachung des Hinweises auf die Patenterteilung: **22.05.1996**
(21) Anmeldenummer: 93112217.0
(22) Anmeldetag: 30.07.1993
(51) Int. Cl.: B60K 17/346

(54) **Antrieb eines Geländewagens**
Drive for a cross-country vehicle
Entraînement pour véhicule tout-terrain

(30) Priorität: 26.09.1992 DE 4232365
(43) Veröffentlichungstag der Anmeldung: 06.04.1994
(73) Patentinhaber: Dr.Ing.h.c. F. Porsche Aktiengesellschaft, D-70435 Stuttgart (DE)
(72) Erfinder: Müller, Robert, D-71297 Mönsheim (DE)

(56) Entgegenhaltungen:
- EP-A- 0 162 021
- DE-A- 3 727 698

## Beschreibung

Die Erfindung betrifft den Antrieb eines Geländewagens mit Allradantrieb und Reduziergetriebe High/Low, dessen Motor und Gangschaltgetriebe an der Vorderachse querliegend angeordnet sind.

Bei Front-quer-Anordnung der Motor-Getriebeeinheit ist die Getriebe-Ausgangswelle nicht zugängig. Das Reduziergetriebe muß deshalb nach der Achsübersetzung (Final Drive) angeordnet werden, wo es wegen der hohen Drehmomente so groß dimensioniert werden müßte, daß es nicht mehr im Bereich Motor/Vorderachse unterbringbar ist.

Geländewagen sollen bei Straßenfahrt, im High-Betrieb, ein untersteuerendes Fahrverhalten zeigen und in Grenzsituationen ein Ausbrechen der Hinterachse vermeiden. Bei Fahrt im Gelände, im Low-Betrieb, ist es wichtig, eine gute Lenkbarkeit des Geländewagens zu erhalten, dessen Vorderachse durch das Gewicht des Hubkolbenmotors und Gangschaltgetriebes belastet ist.

Aus der DE-A-37 27 698 ist ein gattungsgemäßer Antrieb eines Geländewagens bekannt, bei dem ein quer eingebautes Getriebe mit einer Reduzierstufe sowie mehreren, als Mittendifferential wirkenden Getriebebausteinen bekannt ist. Dieses Mittendifferential setzt sich aus einer ersten und einer zweiten Differentialgetriebeeinrichtung zusammen. Um unterschiedliche Drehmomentverhältnisse einstellen zu können, ist ein Umschalten zwischen diesen beiden Differentialgetriebeeinrichtungen erforderlich.

Es ist die Aufgabe der Erfindung, die beiden Forderungen nach Fahrstabilität auf der Straße und guter Lenkbarkeit im Gelände durch einen kostengünstig herstellbaren Antrieb zu erfüllen bei gleichzeitiger Unterbringung eines schaltbaren Reduziergetriebes.

Zur Lösung dieser Aufgabe dienen die kennzeichnenden Merkmale des Anspruchs 1.

Wenn der größere Teil des Drehmoments bei High-Betrieb zur Vorderachse, bei Low-Betrieb zur Hinterachse geleitet wird, lassen sich in beiden Fällen die Forderungen nach Fahrstabilität und Lenkbarkeit des Geländewagens optimal erfüllen.

Problematisch bleibt dann noch die Gestaltung und räumliche Anordnung des Allrads-Antriebs und der Umschaltgruppe, über die diese hohen Momente zur Hinterachse geleitet werden sollen. Eine Lösung dieser Aufgabe gelingt am besten mit den Merkmalen des Anspruches 2.

Ein Ausführungsbeispiel der Erfindung ist in der Zeichnung dargestellt und wird nachfolgend erläutert.

Es zeigen:

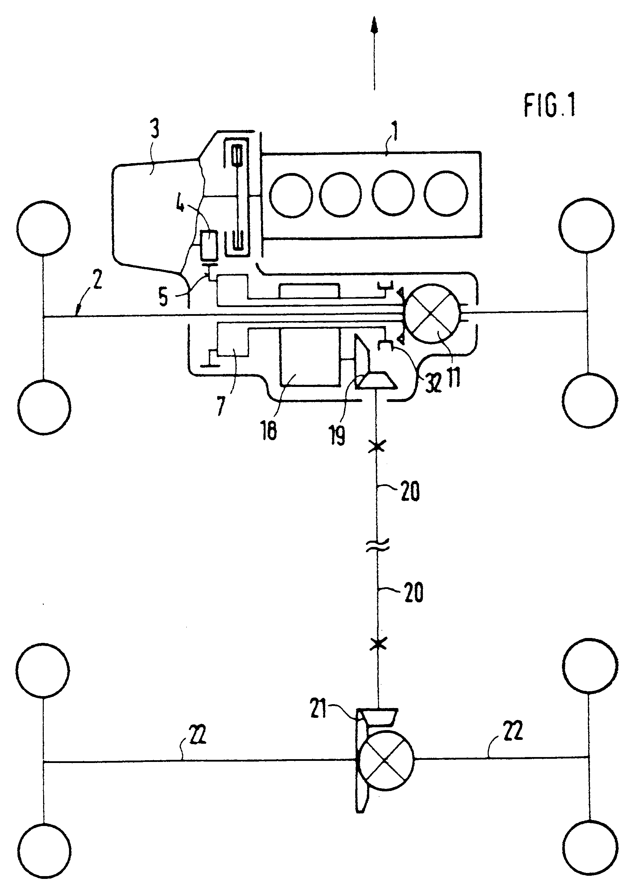

- Figur 1:: Antrieb eines Geländewagens

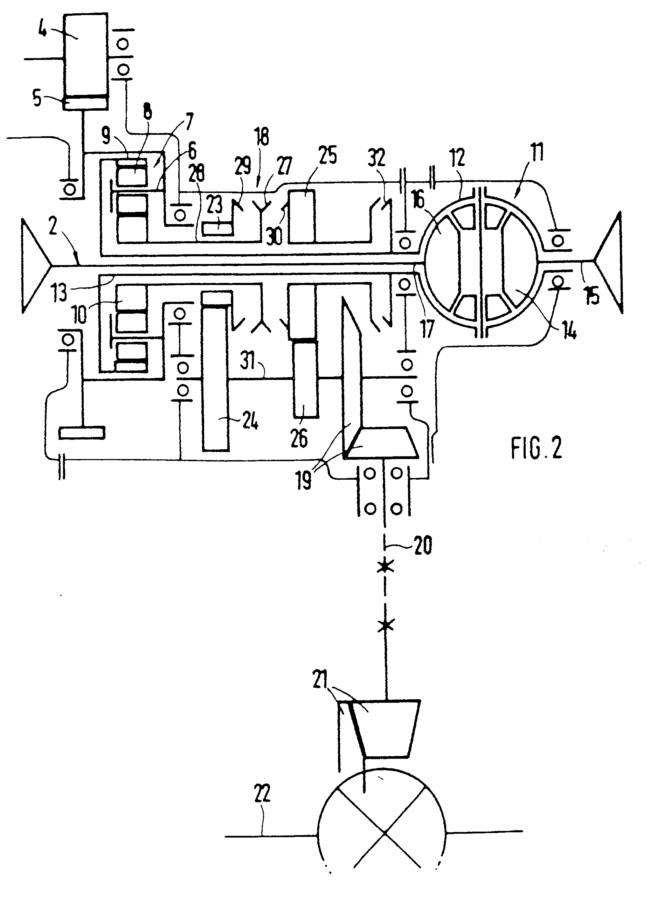

- Figur 2:: Anordnung der Radsätze und Kupplungen beim Antrieb nach Figur 1.

Mit einem Hubkolbenmotor 1, der nahe der Vorderachse 2, quer zur Längserstreckung des Geländewagens angeordnet ist, wird ein ebenfalls querliegendes Gangschaltgetriebe 3 angetrieben. Sein Ausgangsritzel 4 kämmt mit einem Tellerrad 5, mit dem ein Planetenträger 6 eines als Mittendifferential fungierenden Planetengetriebe 7 angetrieben wird. Die am Planetenträger 6 gelagerten Planetenräder 8 kämmen mit einem Hohlrad 9 und einem Sonnenrad 10.

Vom Hohlrad 9 wird die Vorderachse 1 über ein aus vier Kegelrädern aufgebautes Vorderachsdifferential 11 angetrieben. Hierzu ist sein Gehäuse 12 mittels einer inneren Hohlwelle 13 mit dem Hohlrad 9 verbunden. Von dem einen, auf der Vorderachse 2 angeordneten Kegelrad 14 wird die rechte Achsantriebswelle 15, von dem anderen, zu ihm koaxial liegenden Kegelrad 15 die linke Achsantriebswelle 17 angetrieben, die die Hohlwelle 13 auf ihrer ganzen Länge durchsetzt. Die Zähnezahl der Durchmesser des Hohlrades 9 sind ca. doppelt so groß, wie beim Sonnenrad 10. Zur Vorderachse werden deshalb ungefähr zwei Drittel des vom Gangschaltgetriebe 3 gelieferten Antriebsmomentes geleitet. Ein Drittel des Antriebsdrehmoments wird vom Sonnenrad 10 der Umschaltgruppe 18 zugeführt, die über einen vorderen Winkeltrieb 19, eine in Fahrzeuglängsrichtung verlaufende Gelenkwelle 20 und einen hinteren Winkeltrieb 21 die Hinterachse 22 antreibt.

Die Umschaltgruppe 18 besteht aus einem Low-Radpaar 23, 24, einem High-Radpaar 25, 26 und einer zwischen den beiden Radpaaren liegenden Kupplungsmuffe 27. Die Kupplungsmuffe 27 ist über eine äußere Hohlwelle 28 mit dem Sonnenrad 10 verbunden. Je nach Stellung der längsverschieblichen Kupplungsmuffe läßt sich entweder durch Schließen der Kupplung 29 das Losrad 23 des Low-Radpaares oder der Kupplung 30 das Losrad 25 des High-Radpaares drehmomentübertragend mit dem Sonnenrad 10 verbinden. Die Festräder 24 und 26 der beiden Radpaare sitzen auf einer zur Vorderachse 2 parallelen Nebenwelle 31, die das Drehmoment in den vorderen Winkeltrieb 19 einleitet. Die Drehmomentübersetzung im Low-Radpaar beträgt etwa 2:1, im High-Radpaar ca. 0,5:1, im vorderen Winkeltrieb ungefähr 0,5:1, im hinteren Winkeltrieb etwa 4:1.

Die Vorderachse erhält immer ca. zwei Drittel des am Tellerrad 5 vorhandenen Drehmoments. Bei Low-Betrieb fließen zur Hinterachse ungefähr vier Drittel dieses Drehmoments, also ca. doppelt so viel wie zur Vorderachse. Bei High-Betrieb erhält die Hinterachse etwa ein Drittel des Drehmoments, also ungefähr halb so viel wie die Vorderachse.

Im High-Betrieb läuft das Planetengetriebe bei Drehzahlgleichheit von Vorderachse und Hinterachse als Block um. Im Low-Betrieb wirkt es dagegen als leistungsverzweigendes Laufgetriebe.

Das Planetengetriebe kann deshalb nicht direkt, sondern nur indirekt gesperrt werden. Um an ihm eine Allradsperre zu realisieren, ist zwischen dem Losrad 25 des High-Radpaares und der inneren Hohlwelle 13 eine Sperrkupplung 32 angebracht. Hierfür kann eine extern steuerbare Kupplung oder auch eine auf die Drehzahldifferenz zwischen Vorderachse und Hinterachse ansprechende, selbsttätig schließende Kupplung vorgesehen sein. Bei Low-Betrieb fließen über das High-Radpaar 25, 26 lediglich die entsprechend dem Sperrgrad erzeugten Sperrmomente.

## Patentansprüche

1. Antrieb eines Geländewagens mit einem nahe der Vorderachse (2) quer eingebauten Hubkolbenmotor (1) und einem ebenfalls quer eingebauten Gangschaltgetriebe (3), mit dem über ein als Planetengetriebe ausgebildetes, Mittendifferential (7) die Vorderachse (2) und zugleich die Hinterachse (22) permanent angetrieben sind, dadurch gekennzeichnet, (7) daß im Antriebsstrang zur Hinterachse zusätzlich eine dem einzigen Mittendifferential (7) nachgeschaltete, als schaltbares Reduziergetriebe ausgebildete Umschaltgruppe (18) zum Umschalten von Geländebetrieb - Low - auf Straßenbetrieb - High - angeordnet ist, wobei der größere Teil des Drehmoments bei High-Betrieb zur Vorderachse (2), bei Low-Betrieb zur Hinterachse (22) geleitet wird.

2. Antrieb nach Anspruch 1, dadurch gekennzeichnet, daß der Umschaltgruppe (18) nur ein Bruchteil des Getriebeausgangsmoments zugeführt wird und daß in Radsätzen, die der Umschaltgruppe (18) nachgeschaltet sind, eine Momentübersetzung auf den gewünschten höheren Wert erfolgt.

3. Antrieb nach Anspruch 1 oder 2, dadurch gekennzeichnet, daß der Planetenträger (6) des Mittendifferentials (7) vom Gangschaltgetriebe (3) angetrieben ist, das Hohlrad (9) die Vorderachse (2) antreibt und das Sonnenrad (10) die Umschaltgruppe (18) antreibt.

4. Antrieb nach einem der Ansprüche 1 bis 3, dadurch gekennzeichnet, daß die Umschaltgruppe (18) aus zwei jeweils aus Losrad und Festrad bestehenden Radpaaren (23, 24; 25, 26) und einer mittig zwischen den Losrädern (23, 25) angeordneten, mit ihnen Drehmoment übertragend verbindbaren Kupplungsmuffe (27) besteht, wobei die Kupplungsmuffe (27) gegenüber dem Sonnenrad (10) drehfest ist.

5. Antrieb nach Anspruch 4, dadurch gekennzeichnet, daß die Losräder (23, 25) und die Kupplungsmuffe (27) konzentrisch zur Vorderachse (2), die Festräder (24, 26) auf einer zur Vorderachse (2) parallelen Nebenwelle (31) angeordnet sind.

6. Antrieb nach Anspruch 5, dadurch gekennzeichnet, daß die Nebenwelle (31) über einen vorderen Winkeltrieb (19), eine Gelenkwelle (20) und einen hinteren Winkeltrieb (21) die Hinterachse (22) antreibt.

7. Antrieb nach Anspruch 4 und 6, dadurch gekennzeichnet, daß durch geeignete Wahl der Übersetzung im High-Radpaar (25, 26), vorderen Winkeltrieb (19) und hinteren Winkeltrieb (21) bei High-Betrieb an der Vorderachse (2) etwa zwei Drittel des Getriebeausgangsmoments, an der Hinterachse (22) ungefähr ein Drittel des Getriebeausgangsmoments zur Verfügung stehen.

8. Antrieb nach Anspruch 4 und 6, dadurch gekennzeichnet, daß durch geeignete Wahl der Übersetzungen im Low-Radpaar (23, 24), im vorderen Winkeltrieb (19) und hinteren Winkeltrieb (21) bei Low-Betrieb an der Vorderachse (2) ca. zwei Drittel des Getriebeausgangsmoments, an der Hinterachse (22) etwa vier Drittel des Getriebeausgangsmoments zur Verfügung stehen.

9. Antrieb nach Anspruch 7 und 8, dadurch gekennzeichnet, daß die Drehmomentübersetzung im Low-Radpaar (23, 24), 2:1, im High-Radpaar (25, 26) etwa 0,5:1, im vorderen Winkeltrieb ungefähr (19) 0,5:1 und im hinteren Winkeltrieb (21) ca. 4:1 beträgt.

10. Antrieb nach Anspruch 1, dadurch gekennzeichnet, daß auf der Vorderachse (2) in dieser Reihenfolge das Planetengetriebe (7), die Losräder (23, 25) und Kupplungsmuffe (27) der Umschaltgruppe (18) sowie ein Vorderachsdifferential (11) angeordnet sind, dessen Gehäuse (12) von dem Hohlrad (9) mit einer Hohlwelle (13) angetrieben ist, durch die zentral die eine Achsantriebswelle (17) hindurchgeht.

11. Antrieb nach Anspruch 10, dadurch gekennzeichnet, daß das Mittendifferential (7) indirekt durch Schließen einer Sperrkupplung (32) sperrbar ist, die zwischen dem Losrad (25) des High-Radpaares und der Hohlwele (13) angeordnet ist.

12. Antrieb nach Anspruch 2 und 3, dadurch gekennzeichnet, daß bei Drehzahlgleichheit von Vorderachse (2) und Hinterachse (22) das Mittendifferential (7) im High-Betrieb ein im Block umlaufendes Standgetriebe ist, wogegen es bei Low-Betrieb als leistungsverzweigendes Laufgetriebe arbeitet.

## Claims

1. A drive of an off-road vehicle with a reciprocating-piston engine (1), mounted transversely close to the front axle (2), and a gear-shift transmission (3), likewise mounted transversely, by which the front axle (2) and at the same time the rear axle (22) are continuously driven *via* a central differential (7) constructed as a planetary gear, **characterized in that** a change-over group (18) arranged downstream of the single central differential (7) and constructed as a shiftable reduction transmission for changing-over from off-road operation - low to road operation - high is additionally arranged in the driving train to the rear axle, wherein the greater part of the torque is transmitted to the front axle (2) at high operation, and to the rear axle (22) at low operation.

2. A drive according to Claim 1, **characterized in that** only a fraction of the starting torque is supplied to the change-over group (18), and a moment transmission to the desired higher value takes place in sets of gearwheels arranged downstream of the change-over group (18).

3. A drive according to Claim 1 or 2, **characterized in that** the planetary-wheel carrier (6) of the central differential (7) is driven by the gear-shift transmission (3), the hollow gearwheel (9) drives the front axle (2) and the sun wheel (10) drives the change-over group (18).

4. A drive according to one of Claims 1 to 3, **characterized in that** the change-over group (18) comprises two pairs of gearwheels (23, 24; 25, 26), each comprising a loose gearwheel and a fixed gearwheel, and a coupling sleeve (27) arranged between the loose gearwheels (23, 25) and connectable thereto so as to transmit torque, wherein the coupling sleeve (27) is rotationally fixed with respect to the sun wheel (10).

5. A drive according to Claim 4, **characterized in that** the loose gearwheels (23, 25) and the coupling sleeve (27) are arranged concentrically to the front axle (2), and the fixed gearwheels (24, 26) are arranged on a layshaft (31) parallel to the front axle (2).

6. A drive according to Claim 5, **characterized in that** the layshaft (31) drives the rear axle (22) by way of a front angular drive (19), a universal-joint shaft (20) and a rear angular drive (21).

7. A drive according to Claims 4 and 6, **characterized in that** substantially two thirds of the starting torque of the transmission are available on the front axle (2), and substantially one third of the starting torque of the transmission is available on the rear axle (22) by a suitable choice of the gear ratio in the high pair of gearwheels (25, 26), in the front angular drive (19) and in the rear angular drive (21) in high operation.

8. A drive according to Claims 4 and 6, **characterized in that** substantially two thirds of the starting torque of the transmission are available on the front axle (2), and substantially four thirds of the starting torque of the transmission is available on the rear axle (22) by a suitable choice of the gear ratios in the low pair of gearwheels (23, 24), in the front angular drive (19) and in the rear angular drive (21) in low operation.

9. A drive according to Claims 7 and 8, **characterized in that** the transmission of torque amounts to 2 : 1 in the low pair of gearwheels (23, 24), about 0·5 : 1 in the high pair of gearwheels (25, 26), 0·5 : 1 in the front angular drive (19) and about 4 : 1 in the rear angular drive (21).

10. A drive according to Claim 1, **characterized in that** the planetary gear (7), the loose gearwheels (23, 25) and the coupling sleeve (27) of the change-over group (18) as well as a front-axle differential (11) are arranged on the front axle (2) in this sequence, the housing (12) of the said front-axle differential (11) being driven by the hollow gearwheel (9) with a hollow shaft (13) through which an axle-drive shaft (17) passes centrally.

11. A drive according to Claim 10, **characterized in that** the central differential (7) is lockable indirectly by closing a locking coupling (32) arranged between the loose gearwheel (25) of the high pair of gearwheels and the hollow shaft (13).

12. A drive according to Claims 2 and 3, **characterized in that** when the rotational speed of the front axle (2) and the rear axle (22) is the same the central differential (7) in high operation is a stationary transmission rotating in the block, whereas in low operation it runs as a power-dividing moving transmission.

## Revendications

1. Entraînement d'un véhicule tout-terrain, avec un moteur à pistons alternatifs (1) intégré transversalement à proximité de l'essieu avant (2) et une boîte de vitesses (3), également intégrée transversalement, à l'aide de laquelle sont entraînés, de façon permanente, par l'intermédiaire d'un différentiel central (7) réalisé en mécanisme à engrenage planétaire, l'essieu avant (2) et, en même temps, l'essieu arrière (22), caractérisé en ce que, dans le train de transmission d'entraînement allant vers l'essieu arrière, est disposé en plus un groupe de commutation (18), mis en circuit en aval du différentiel central (7) unique et réalisé sous forme de mécanisme à engrenage réducteur pouvant être manoeuvré, pour assurer la commutation du fonctionnement en tout-terrain - à vitesse basse - au fonctionnement sur route - à vitesse élevée -, la plus grande part du couple étant dirigée vers l'essieu avant (2) lors du fonctionnement à vitesse élevée et étant dirigée vers l'essieu arrière (22) lors du fonctionnement à vitesse lente.

2. Entraînement selon la revendication 1, caractérisé en ce qu'au groupe de commutation (18) n'est amenée qu'une fraction du couple de sortie de la boîte de vitesses et qu'une transformation de couple s'effectue dans des jeux de roues mis en circuit en aval du groupe de commutation (18), de façon à obtenir la valeur élevée souhaitée.

3. Entraînement selon la revendication 1 ou la revendication 2, caractérisé en ce que le support planétaire (6) du différentiel central (7) est entraîné par la transmission à étagement de vitesses (3), la roue à denture intérieure (9) entraînant l'essieu avant (2), et la roue solaire (10) entraînant le groupe de commutation (18).

4. Entraînement selon l'une des revendications 1 à 3, caractérisé en ce que le groupe de commutation (18) est constitué de deux paires de roue (23, 24; 25, 26), constituées chacune d'une roue folle et d'une roue fixe, et d'un manchon d'accouplement (27), disposé entre les roues folles (23, 25) et susceptible d'être relié avec transmission d'un couple, le manchon d'accouplement (27) étant assujetti en rotation par rapport à la roue solaire (10)

5. Entraînement selon la revendication 4, caractérisé en ce que les roues folles (23, 25) et le manchon d'accouplement (27) sont disposés concentriquement par rapport à l'essieu avant (2), les roues fixes (24, 26) sont disposées sur un arbre annexe (31) parallèle à l'essieu avant (2).

6. Entraînement selon la revendication 5, caractérisé en ce que l'arbre annexe (31) entraîne l'essieu arrière (22) par l'intermédiaire d'une transmission à renvoi d'angle avant (19), d'un arbre articulé (20) et d'une transmission à renvoi d'angle arrière (21).

7. Entraînement selon les revendications 4 et 6, caractérisé en ce que par un choix approprié du rapport de transmission dans la paire de roue à vitesse élevée (25, 26), la transmission à renvoi d'angle avant (19) et la transmission à renvoi d'angle arrière (21), en cas de fonctionnement à vitesse élevée, à peu près deux tiers du couple de sortie de la boîte de vitesses sont disponibles sur l'essieu avant (2) et à peu près un tiers du couple de sortie de la boîte de vitesses est disponible sur l'essieu arrière (22).

8. Entraînement selon les revendications 4 et 6, caractérisé en ce que par un choix approprié des rapports de transmission dans la paire de roue à vitesse basse (23, 24), dans la transmission à renvoi d'angle avant (19) et dans la transmission à renvoi d'angle arrière (21), en cas de fonctionnement à vitesse basse, à peu près deux tiers du couple de sortie de la boîte de vitesses sont transmis à l'essieu avant (2), à peu près quatre tiers du couple de sortie de la boîte de vitesses sont disponibles sur l'essieu arrière (22).

9. Entraînement selon les revendications 7 et 8, caractérisé en ce que la transformation de couple dans la paire de roues à vitesse basse (23, 24) est dans un rapport de 2:1, dans la paire de roue à vitesse élevée (25, 26) elle est dans un rapport d'à peu près 0,5:1, dans la transmission à renvoi d'angle avant (19) elle est d'un rapport d'à peu près 0,5:1 et dans la transmission à renvoi d'angle arrière (21) elle est dans un rapport d'à peu près 4:1.

10. Entraînement selon la revendication 1, caractérisé en ce que sur l'essieu avant (2) sont disposés, dans cet ordre de succession, la transmission planétaire (7), les roues folles (23, 25) et le manchon d'accouplement (27) du groupe de commutation (18), ainsi qu'un différentiel d'essieu avant (11), dont le carter (12) est entraîné par la roue à denture intérieure (9) à l'aide d'un arbre creux (13) à travers lequel passe centralement un arbre d'entraînement d'essieu (17).

11. Entraînement selon la revendication 10, caractérisé en ce que le différentiel central (7) est blocable indirectement par fermeture d'un accouplement de blocage (32) disposé entre la roue folle (25) de la paire de roues à vitesse élevée et l'arbre creux (13).

12. Entraînement selon les revendications 2 et 3, caractérisé en ce que, en cas d'égalité des vitesses de rotation de l'essieu avant (2) et de l'essieu arrière (22), le différentiel central (7), lorsque l'on se trouve en fonctionnement à vitesse élevée, est une transmission à élément fixe, tournant d'un bloc, alors que par contre, lorsqu'on est dans le fonctionnement à vitesse basse, elle fonctionne comme une transmission à éléments mobiles, assurant une ramification de la puissance.
